# EUROPEAN PATENT APPLICATION

(11) **EP 2 587 080 A1**
(43) Date of publication of application: **01.05.2013**
(21) Application number: 12189383.8
(22) Date of filing: 22.10.2012
(51) Int. Cl.: F16C 29/02, F16C 32/06

(54) **Variable flow-rate hydrostatic bearing**

(30) Priority: 28.10.2011 JP 2011237387
(71) Applicant: JTEKT CORPORATION, Osaka-shi Osaka 542-8502 (JP)
(72) Inventor: Hashimoto, Takaaki, Osaka-shi, Osaka 542-8502 (JP)
(74) Representative: TBK

(57) **Abstract**

A variable flow-rate hydrostatic bearing includes a variable flow-rate adjusting portion that reduces the flow rate of fluid and then introduces the fluid into a pocket. The variable flow-rate adjusting portion is configured such that a fluid supply chamber (32a) is separated from a fluid storage chamber (31a) having a projection (31b) by a leaf spring (33) that faces the projection (31b) with a predetermined clearance left therebetween, and the projection (31b) has an opening (31c) and a flow passage that is in communication with the pocket (2a). In the variable flow-rate hydrostatic bearing, a fixed orifice (33a) that provides communication between the fluid supply chamber (32a) and the fluid storage chamber (31a) is formed in the leaf spring (33) at a portion that does not face the projection (31b).

## Description

### BACKGROUND OF THE INVENTION

### 1. Field of the Invention

The invention relates to a variable flow-rate hydrostatic bearing that includes a two-stage flow-rate adjuster that has a fixed orifice and a variable flow-rate adjusting portion. 2. Discussion of Background

It is known that, in a hydrostatic bearing, if a two-stage flow-rate adjuster that has a fixed orifice and a variable flow-rate adjusting portion is provided in a supply passage to a pocket, it is possible to improve the stiffness when a high load is applied to the bearing, the pressure in the pocket increases, and the difference between the pressure in the pocket and the supplied pressure becomes small.

Japanese Patent Application Publication No. 2002-286037 (JP 2002-286037 A) describes a variable flow-rate hydrostatic bearing that includes a two-stage flow-rate adjuster. In the two-stage flow-rate adjuster, a fluid supply chamber and an inflow passage to a pocket are separated by a movable member with a fixed orifice, an opening is formed so as to open into the fluid supply chamber and face the movable member. As the clearance between the movable member and the opening changes in accordance with the pressure in the inflow passage to the pocket, the two-stage flow-rate adjuster adjusts the flow rate of the fluid that is discharged from the opening. In order to reduce resistance generated when the movable member contacts the wall of a guide hole, a fluid supply pocket is formed in a side face of the movable member.

In the related art described in JP 2002-286037 A, the sum of the flow rate of the fluid discharged from the fixed orifice formed in the movable member and the flow rate of fluid discharged from the clearance between the movable member and the wall of the guide hole is the fixed orifice flow rate. However, the movable member may be tilted during its movement. Therefore, even if the pressure in the inflow passage to the pocket is constant, the flow rate of the fluid discharged from the clearance changes in accordance with the degree of tilt of the movable member. As a result, the fixed orifice flow rate may change, that is, the reduction rate of the fixed orifice may change.

### SUMMARY OF THE INVENTION

The invention provides a variable flow-rate hydrostatic bearing that includes a two-stage flow-rate adjuster that has a simple configuration and that has a fixed orifice of which the reduction rate does not change.

According to a feature of an example of the invention, a flow passage that is provided with a fixed orifice and a variable flow-rate adjusting portion is formed of a fluid supply chamber, a fluid storage chamber, and a leaf spring.

### BRIEF DESCRIPTION OF THE DRAWINGS

The foregoing and further objects, features and advantages of the invention will become apparent from the following description of example embodiment with reference to the accompanying drawings, wherein like numerals are used to represent like elements and wherein:
FIG. 1 is a schematic view that shows the overall configuration of a slide table device according to an embodiment of the invention;
FIG. 2 is a sectional view taken along the line A-A in FIG. 1;
FIG. 3 is a detailed view of a portion B in FIG. 2;
FIG. 4 is a sectional view taken along the line C-C in FIG. 3; and
FIG. 5 shows an operation of a variable flow-rate adjusting portion.

### DETAILED DESCRIPTION OF EMBODIMENTS

Hereinafter, embodiments of the invention will be described with reference to the accompanying drawings.

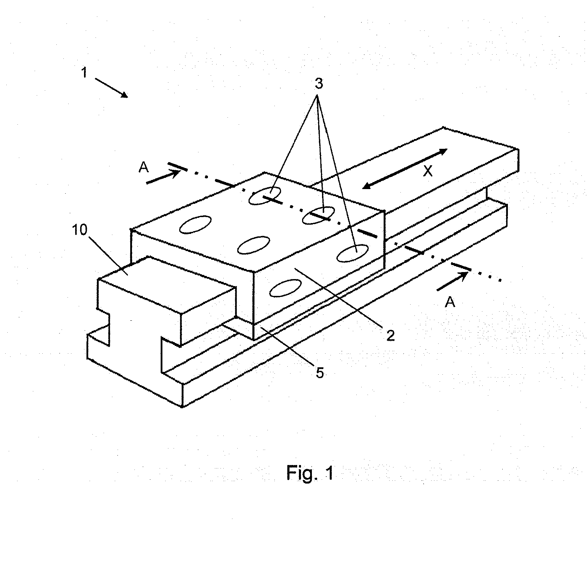

As shown in FIG. 1, in a table feeding device 1, a table 2 (bearing body) is slidably mounted on a slide portion of a base 10 (fixed member), and a pair of holding plates 5 (bearing body) is connected to the lower portions of respective ends of the table 2. Thus, the table 2 is movable only in an X-axis direction.

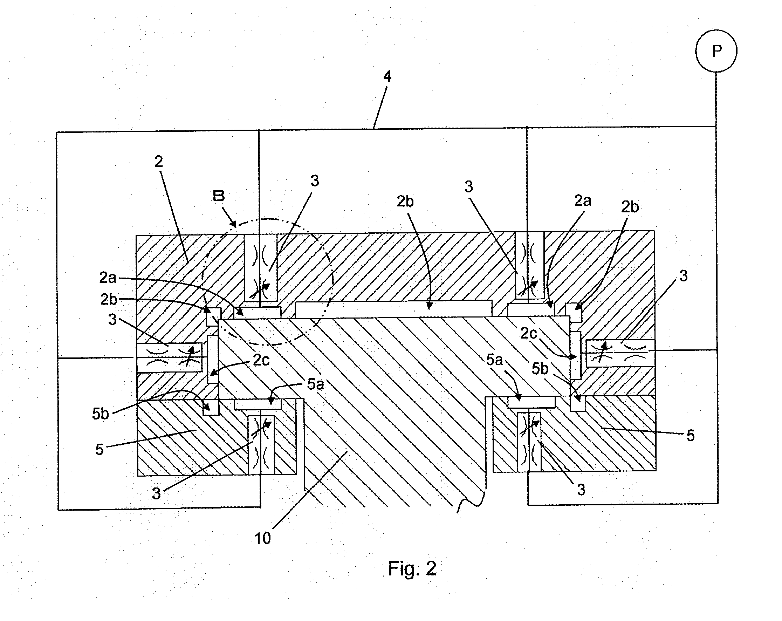

As shown in FIG. 2, the table 2 has, in its surfaces that face the base 10, two pockets 2a that open downward and a pair of pockets 2c that face each other in the lateral direction. Two-stage flow-rate adjusters 3 are communicated with the respective pockets 2a, 2c. Each two-stage flow-rate adjuster 3 is formed by arranging fixed orifices and a variable flow-rate adjusting portion in series. Oil supply ducts 4 are communicated with the respective two-stage flow-rate adjusters 3. A drain groove 2b is formed around each pocket 2a.

Each holding plate 5 has a pocket 5a that opens upward. Two-stage flow-rate adjusters 3 are communicated with the respective pockets 5a. Oil supply ducts 4 are communicated with the respective two-stage flow-rate adjusters 3. A drain groove 5b is formed around each pocket 5a.

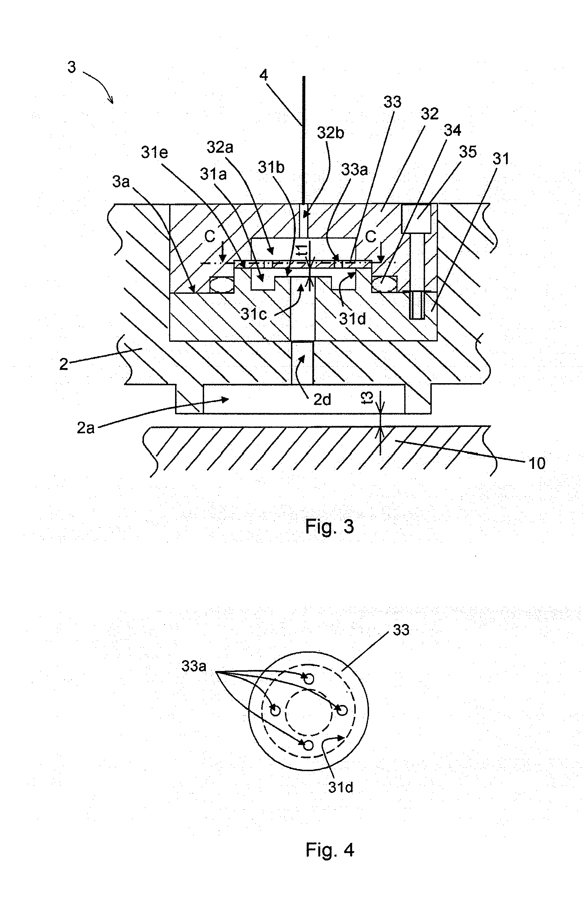

FIG. 3 shows the details of each two-stage flow-rate adjuster 3. Each two-stage flow-rate adjuster 3 has a structure in which a variable flow-rate adjusting base 31 that has a fluid storage chamber 31a and a cap 32 that has a fluid supply chamber 32a are fastened together with a bolt 35, at a mating surface 3a such that the fluid storage chamber 31a and the fluid supply chamber 32a are aligned with each other, and an O-ring 34 is provided at an assembled portion. The variable flow-rate adjusting base 31 has a projection 31b and a discharge port 31c at the center portion of the fluid storage chamber 31a. An outer periphery 31d of the fluid storage chamber 31a is circular. A leaf spring fixed portion 31e that is parallel to the upper face of the projection 31b is formed around the outer periphery 31d. A leaf spring 33 is fitted onto the upper face of the leaf spring fixed portion 31e, and is fixed between the leaf spring fixed portion 31e and the cap 32.

The upper face of the leaf spring fixed portion 31e and the upper face of the projection 31b are set such that a predetermined level difference t1 is formed therebetween. When the leaf spring 33 is not deflected, the upper face of the projection 31b faces the leaf spring 33 with a clearance t1 left therebetween. The leaf spring 33 has fixed orifices 33a that provide communication between the fluid supply chamber 32a and the fluid storage chamber 31a. As shown in FIG. 4, the fixed orifices 33a are arranged at four positions that are rotationally symmetric with respect to the center of the outer periphery 31d. The duct 4 is communicated with the fluid supply chamber 32a via a flow passage 32b, and the discharge port 31c is communicated with the pocket 2a via an inflow passage 2d of the table 2.

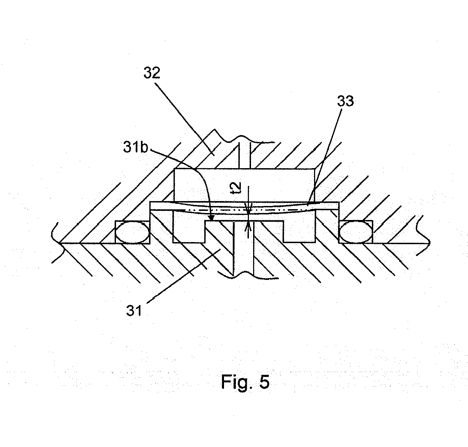

An operation of the variable flow-rate hydrostatic bearing will be described with reference to FIG. 3 and FIG. 5. When a fluid is supplied to the duct 4, the fluid supply chamber 32a is filled with fluid, the fluid storage chamber 31a is filled with fluid via the fixed orifices 33a, and, furthermore, the fluid in the fluid storage chamber 31a flows at a flow rate Q into the pocket 2a via a clearance between the leaf spring 33 and the projection 31b and the discharge port 31c. The fluid flows at the flow rate Q from the pocket 2a into the drain groove 2b via a clearance t3 between the pocket 2a and the base 10.

The above-described operation also occurs at each of the pockets 2c formed in the table 2 so as to extend vertically and at the pockets 5a of the holding plates 5. As a result, the base 10 and the table 2 are held with the clearance t3 left therebetween at each pocket 2a portion.

At this time, when the pressure of fluid supplied to the fluid supply chamber 32a is P0, the pressure inside the fluid storage chamber 31a is to P1 that is lower than P0 because the pressure of the fluid is reduced by the fixed orifices 33a. The pressure inside the pocket 2a is P2 that is lower than P1 because the pressure of the fluid is further reduced at the clearance between the leaf spring 33 and the projection 31b. Therefore, as shown in FIG. 5, the leaf spring 33 receives force due to a pressure difference and is deflected in the direction toward the projection 31b. The clearance between the leaf spring 33 and the projection 31b becomes t2 at which a force generated by the pressures P0 and P1 that are applied to respective faces of the leaf spring 33 and the pressure P2 in the pocket 2a, which is applied to the discharge port 31c, and the elastic restoring force of the leaf spring 33 balance out each other.

When a downward load is applied to the table 2 in this state, the table 2 moves downward. Therefore, the clearance t3 between the pocket 2a and the base 10 decreases, and the amount of fluid discharged from the clearance t3 decreases. Then, the pressure inside the pocket 2a increases. Therefore, the pressure in the discharge port 31c that is in communication with the pocket 2a also increases.

Accordingly, upward force received by the face of the leaf spring 33, which faces the discharge port 31c, increases, the leaf spring 33 is deflected upward, and the clearance t2 between the leaf spring 33 and the projection 31b increases. As a result, the flow rate of the fluid that flows into the pocket 2a via the clearance t2 and the discharge port 31c increases. As the flow rate of the fluid that is discharged from the clearance t3 between the pocket 2a and the base 10 increases, an action of reducing changes in the clearance t3 with respect to a load (increasing the stiffness) works. As a result, reduction in the clearance t3 between the pocket 2a and the base 10 is prevented.

According to the invention, the operation of each variable flow-rate adjusting portion is a motion due to elastic deformation. Therefore, smooth motion is possible and another fixed member does not contact a moving portion.

When a movable member is used, the sum of the flow rate of the fluid discharged from a fixed orifice formed in the movable member and the flow rate of fluid discharged from the clearance between the movable member and the wall of a guide hole is the fixed orifice flow rate. However, because the flow rate of the fluid discharged from the clearance changes with a change in the position of the movable member, the fixed orifice flow rate changes. In the invention, because there is no flow passage other than the fixed orifices 33a, the fixed orifice flow rate does not change.

Furthermore, each variable flow-rate adjusting portion adjusts the flow rate by changing the clearance between the leaf spring 33 and the projection 31b in accordance with the pressure inside the pocket 2a. Therefore, the leaf spring 33 desirably makes a motion while being in parallel to the upper face of the projection 31b. Particularly, when the leaf spring 33 is tilted in the case where the flow rate is reduced, part of the leaf spring 33 contacts the projection 31b, and it is not possible to further reduce the flow rate. In the invention, the fixed orifices 33a of the leaf spring 33 and the fixed portion are rotationally symmetric with respect to the projection 31b. Therefore, the center portion of the leaf spring 33 is able to make a motion while being in parallel to the flat surface of the projection 31b.

As described above, according to the invention, it is possible to obtain the variable flow-rate hydrostatic bearing that includes the fixed orifice having a fixed reduction rate and the variable flow-rate adjusting portion that is able to reduce the flow rate to a considerably low flow rate.

In the above description, the invention is applied to a linear motion table feeding. Alternatively, the invention may be applied to a rotary shaft. The fixed member in this case is the rotary shaft.
A variable flow-rate hydrostatic bearing includes a variable flow-rate adjusting portion that reduces the flow rate of fluid and then introduces the fluid into a pocket. The variable flow-rate adjusting portion is configured such that a fluid supply chamber (32a) is separated from a fluid storage chamber (31a) having a projection (31b) by a leaf spring (33) that faces the projection (31b) with a predetermined clearance left therebetween, and the projection (31b) has an opening (31c) and a flow passage that is in communication with the pocket (2a). In the variable flow-rate hydrostatic bearing, a fixed orifice (33a) that provides communication between the fluid supply chamber (32a) and the fluid storage chamber (31a) is formed in the leaf spring (33) at a portion that does not face the projection (31b).

## Claims

1. A variable flow-rate hydrostatic bearing, comprising:
a bearing body that is arranged with a clearance left between the bearing body and a fixed member;
a pocket that is formed in the bearing body so as to face the fixed member;
a fluid supply port through which fluid is supplied to the pocket; and
a variable flow-rate adjusting portion that reduces a flow rate of the fluid that is supplied from the fluid supply port and then introduces the fluid into the pocket,
wherein the variable flow-rate adjusting portion includes:
a fluid supply chamber;
a fluid storage chamber that has a projection at a center portion;
a leaf spring that separates the fluid supply chamber from the fluid storage chamber, an outer peripheral portion of the leaf spring being fixed, and a surface of the leaf spring, which is perpendicular to a thickness direction of the leaf spring, facing the projection with a predetermined clearance left between the leaf spring and the projection; and
a flow passage that is formed in the projection so as to be communicated with the pocket, and
wherein a fixed orifice that provides communication between the fluid supply chamber and the fluid storage chamber is formed in the leaf spring at a portion that does not face the projection.

2. The variable flow-rate hydrostatic bearing according to claim 1, wherein
an inner periphery of a fixed portion for the leaf spring is in a circular shape, and a plurality of the fixed orifices is formed so as to be rotationally symmetric with respect to the center of the circular shape.
